## Europäisches Patentamt

(19) **European Patent Office**

(11) Numéro de publication: **0 204 594**
**B1**

**Office européen des brevets**

(12) # FASCICULE DE BREVET EUROPÉEN

(45) Date de publication du fascicule du brevet: **08.03.89**

(51) Int. Cl.⁴: **H 01 H 71/68,** H 02 H 7/22

(21) Numéro de dépôt: **86400936.0**

(22) Date de dépôt: **29.04.86**

(54) Appareil interrupteur protégé contre les courants de court-circuit.

(30) Priorité: **06.05.85 FR 8507163**

(43) Date de publication de la demande:
**10.12.86 Bulletin 86/50**

(45) Mention de la délivrance du brevet:
**08.03.89 Bulletin 89/10**

(84) Etats contractants désignés:
**AT BE CH LI LU NL SE**

(56) Documents cité:
**EP-A-0 104 981**
**EP-A-0 118 333**
**GB-A-2 066 658**

(73) Titulaire: **LA TELEMECANIQUE ELECTRIQUE, 33 bis, avenue du Maréchal Joffre, F-92000 Nanterre (FR)**

(72) Inventeur: **Belbel, Elie, 11, rue des Econdeaux, F-93800 Epinay Sur Seine (FR)**
Inventeur: **Blanchard, Christian, 4, rue de Tilana, F-92000 Nanterre (FR)**
Inventeur: **Haury, André, 75, avenue Thiers, F-93340 Le Raincy (FR)**
Inventeur: **Lauraire, Michel, 43, avenue du Capitaine Guynemer, F-92400 Courbevoie (FR)**

(74) Mandataire: **Marquer, Francis, Cabinet Moutard 35, Avenue Victor Hugo, F-78960 Voisins le Bretonneux (FR)**

## Description

L'invention se rapporte à un appareil interrupteur conformément à la première partie de la revendication 1.

Dans les appareils connus, qui répondent à la constitution générale mentionnée ci-dessus, on rencontre différents types d'interrupteurs limiteurs ayant des propriétés particulières, qui les font préférer selon la nature des lignes, de la charge, de la capacité propre du premier interrupteur à supporter des surcharges et, également, selon la fréquence probable de l'apparition des défauts.

Ces interrupteurs limiteurs peuvent être des fusibles, des interrupteurs mécaniques à ouverture rapide comparables à ceux des disjoncteurs, des interrupteurs à ouverture automatique qui exploitent les forces de répulsion, ou des interrupteurs à écran isolant dans lesquels ce dernier opère un cisaillement rapide de l'arc.

Si l'on ne prend pas d'autres mesures que celles consistant à placer en série les deux interrupteurs, on est amené à associer au premier interrupteur des dispositifs de compensation de force destinés à éviter un soulèvement du contact mobile sous l'effet de forces de répulsion qui se développent localement; ces dispositifs font généralement appel à des pièces magnétisables dont le comportement en présence de courants importants contrebalance les forces de répulsion électro-dynamique qui provoquent ces soulèvements.

Ces dispositifs et mesures n'évitent pas toutefois que le premier interrupteur soit traversé par des courants très importants, et que, par suite, sa géométrie doive en tenir compte.

On a également proposé de munir les contacts mobiles du premier interrupteur de ressorts de pression très énergiques, pour éviter les soulèvements mentionnés ci-dessus, mais cette mesure nécessite la mise en oeuvre d'un électroaimant si puissant que l'appareil contacteur doit alors subir une refonte totale de sa constitution.

On a enfin proposé de déclasser les appareils contacteurs utilisés dans les circonstances mentionnées, c'est-à-dire de mettre en circuit un premier interrupteur appartenant à un appareil convenant pour un courant nominal beaucoup plus important; une telle solution est évidemment coûteuse, et aboutit là encore à une surcharge matérielle des installations.

L'invention se propose, par suite, de fournir à un appareil combiné tel que celui dont la constitution générale est définie ci-dessus, des moyens robustes aptes à transférer une fraction importante du courant de surcharge dans une voie parallèle.

Il est connu, du document EP-A-0 104 981, de protéger le semi-conducteur d'un commutateur statique qui assure la télécommande d'un disjoncteur en utilisant la commutation, sur une électrode de transfert, de l'arc engendré à l'ouverture du disjoncteur lors de l'apparition d'un courant de surcharge pour shunter le semi-conducteur.

Le transfert de l'arc est largement facilité par le fait que l'impédance apparente du circuit du semi-conducteur est très supérieure à celle du circuit de dérivation. Il n'en serait pas de même avec un interrupteur mécanique télécommandé, dont l'impédance serait très voisine de celle du circuit de dérivation, ce qui rendrait le transfert d'arc très difficile.

L'invention propose donc de résoudre le problème de la protection d'un interrupteur mécanique télécommandé connecté en série avec un interrupteur à ouverture automatique présentant des propriétés de limitation des courants de défaut tels que ceux des courts-circuits, au moyen des dispositions définies à la revendication 1.

Il est à noter que le document EP-A-0 118 333 prévoit d'interposer un écran isolant entre les contacts d'un interrupteur mécanique lors de l'ouverture de ceux-ci pour assurer un cisaillement de l'arc, mais ne combine pas un tel écran avec une électrode de transfert en vue de protéger un interrupteur mécanique en série avec l'interrupteur à ouverture automatique qui est muni de l'écran.

L'invention, ainsi que différents modes de mise en oeuvre auxquels elle se prête, seront mieux compris à la lecture de la description ci-dessous, qui est accompagnée par les figures annexées, parmi lesquelles:

La figure 1 représente de façon schématique un dispositif ou appareil selon l'invention;

La figure 2 montre de façon simplifiée un mode de réalisation dans lequel on utilise un écran isolant pour transférer l'arc initial;

La figure 3 représente un autre mode de réalisation dans lequel le contact fixe et l'électrode de transfert sont sensiblement alignés dans le sens de déplacement de l'écran;

La figure 4 représente de façon simplifiée un mode de réalisation dans lequel le contact fixe et l'électrode de transfert sont placés latéralement par rapport au sens de déplacement de l'écran;

La figure 5 illustre un appareil selon l'invention dans une vue en coupe par le plan PP' de la figure 7;

La figure 6 montre à plus grande échelle une région de l'appareil interrupteur selon la figure 5;

La figure 7 montre une vue de dessus de l'appareil coupé par le plan QQ' de la figure 6;

Les figures 8, 9 et 10 representent des coupes locales de différents modes de réalisation de l'électrode de transfert et de l'écran tubulaire qui lui est associé;

La figure 11 illustre dans une vue simplifiée des organes associés de façon complémentaire à un appareil tel que celui décrit aux figures précédentes;

La figure 12 montre une vue de dessus d'un appareil tel que celui représenté à la figure 5, dans lequel ont été apportés notamment des aménagements tels que ceux montrés à la figure 11;

La figure 13 représente de façon simplifiée des organes associés de façon complémentaire pour que l'appareil précédent puisse posséder une fonction supplémentaire de sectionneur;

Les figures 14 et 15 représentent schématiquement deux états possibles des arcs apparaissant lors de l'ouverture de l'interrupteur de protection; et

Les figures 16 et 17 représentent schématiquement des moyens de fourniture d'énergie aptes à opérer une propulsion rapide de l'écran isolant.

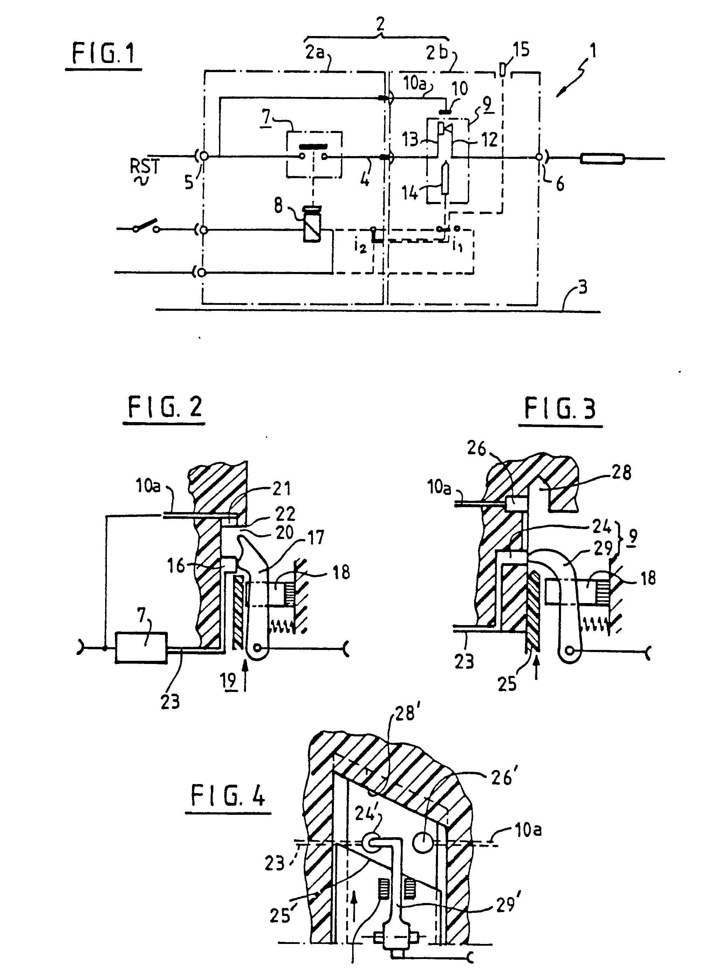

Un appareil ou système interrupteur de protection 1 (visible à la figure 1), comprend dans un boîtier isolant 2 apte à être fixé sur un support 3, une pluralité de circuits internes tels que 4, qui aboutissent chacun à deux bornes de raccordement telles que 5 et 6, et comprennent en série un dispositif interrupteur de type contacteur 7, qui est apte à être commandé par un électro-aimant 8, et un dispositif interrupteur de protection 9 de type limiteur de courant à ouverture automatique lors de l'apparition de courants anormalement élevés tels que ceux survenant lors de courts-circuits. Ce dispositif 9 comprend une électrode de transfert 10 qui est placée au voisinage des contacts de l'interrupteur 9 et un conducteur de dérivation $10_a$ qui relie cette électrode au potentiel de la borne 5; cette dernière est reliée par exemple au réseau d'alimentation RST, tandis que la borne opposee 6 est reliée, par exemple, à une charge 11. Si l'appareil est destiné à être installé dans un réseau polyphasé, on dispose d'autant de circuits 4.....$10_a$ que de phases et un seul électro-aimant 8 opère simultanément la commande des multiples interrupteurs 7.

Un interrupteur à ouverture automatique peut, par exemple, et de préférence, s'ouvrir sous l'effet d'importantes forces de répulsions qui se développent entre ses pièces fixes et mobiles; dans ce cas, des pièces magnétisables connues en soi, telles que des branches parallèles d'un circuit en forme de U, peuvent leur être associées aux supports des contacts mobiles pour combiner avec des forces de répulsion, celles provenant d'effets électro-magnétiques qui agissent dans le même sens d'ouverture du contact mobile.

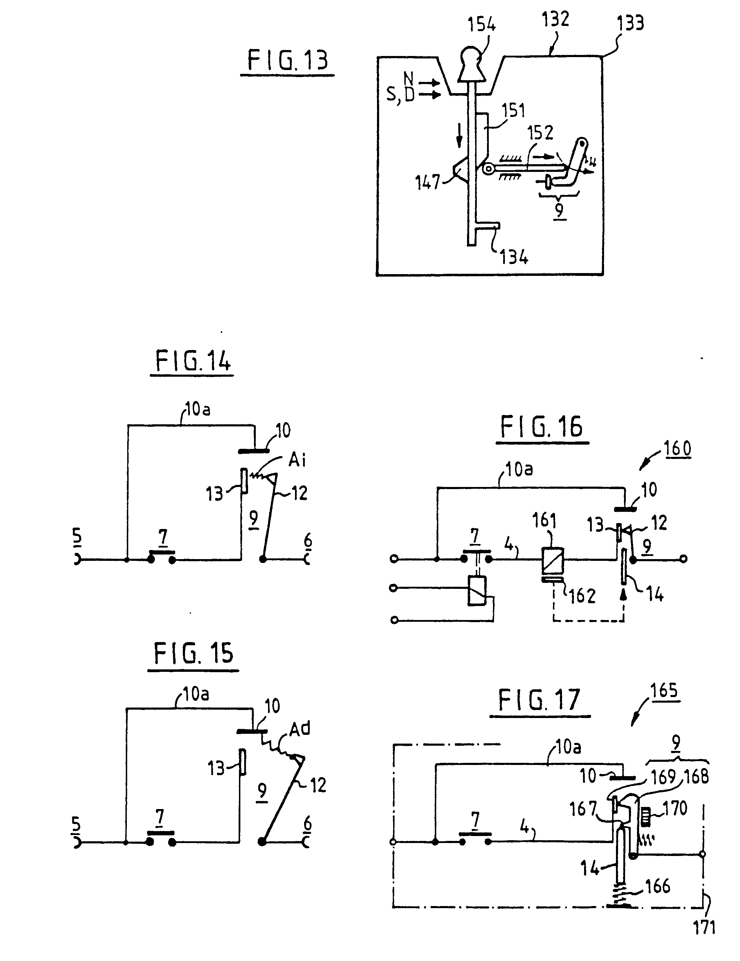

Dans la disposition schématique représentée, les contacts 13 et 12 sont respectivement l'un fixe, l'autre mobile, et l'électrode de transfert 10 qui se trouve au voisinage de ces deux contacts est placée de façon telle qu'un arc initial Ai, apparaissant entre ces contacts au moment de leur ouverture, établisse au cours du déplacement du contact mobile 12 une zone ionisée déformable s'étendant jusqu'à cette électrode 10 pour qu'un arc de dérivation Ad s'établisse entre elle et le contact 12 et que l'arc initial s'éteigne. Le courant très important qui passait ou serait passé alors par l'interrupteur 7 circule donc par le conducteur de dérivation $10_a$, voir figures 14 et 15.

Selon un autre mode de réalisation, qui facilite le transfert ou la transformation de l'arc initial en un arc de dérivation, voir figure 2, on dispose entre les contacts 16, 17 du second interrupteur 18 et à leur voisinage, un écran isolant 19 qui vient s'intercaler entre eux à grande vitesse dès leur ouverture; au terme d'un certain déplacement, l'écran conduit l'arc initial Ai vers une zone 20 propice à son transfert sur l'électrode 21 reliée comme précédemment au conducteur de dérivation 10a; l'arc initial sera alors cisaillé par l'écran (ou respectivement par un bord d'une ouverture de l'écran) contre une paroi isolante 22, après que, grâce à la présence de l'atmosphère déjà ionisée, un arc de dérivation Ad ait jailli entre le contact mobile 17 et l'electrode 21; ce dernier arc s'éteint ensuite, par exemple, en raison d'un allongement dû au mouvement du contact mobile ou d'un tractionnement, sur des ailettes métalliques qui le refroidissent. Au cours du processus, l'écran opère de préférence un isolement total entre les contacts 16, 17 et 21, 17, par exemple grâce à des recouvrements de surfaces isolantes, à l'utilisation de chicanes du boîtier, etc...

Selon un autre mode de réalisation, visible à la figure 3, et dérivé du précédent auquel certains repères d'organes sont empruntés, le même écran 25 opère successivement le déplacement de l'arc initial Ai issu des contacts fixe 24 et mobile 29, son transfert sur l'électrode de dérivation 26, le cisaillement de l'arc initial contre une première surface 27, et le cisaillement de l'arc dérivé Ad contre une seconde surface ou rainure 28 isolante du boîtier, afin de protéger le premier interrupteur et opérer une protection rapide de la ligne; le contact 24 et l'électrode 26 peuvent être alignés selon le sens de déplacement de l'écran, voir figure 3, ou placés transversalement, le bord de l'écran étant par exemple incliné par rapport à ce sens, voir figure 4.

Dans les schémas de principe d'appareils selon les figures 2 à 4, on suppose qu'une source d'énergie, développée au moment où apparaît un court-circuit propulse rapidement l'écran entre les contacts fixe et mobile.

Selon un mode de réalisation 160, dont le principe est visible à la figure 16, où les organes ayant de mêmes fonctions portent les mêmes repères, un bobinage 161 est placé en série dans le circuit 4; ce bobinage attire très rapidement une palette ou un noyau 162 lorsqu'apparaissent des courants très élevés et le mouvement de celui-ci est communiqué à l'écran 14 dès que les contacts 12 et 13 sont ouverts.

Selon un autre mode de réalisation 165, dont le principe est indiqué à la figure 17, un ressort 166 préalablement armé dont des extrémités s'appuyent sur le boîtier 171 et sur l'écran 14, est libéré lorsqu'un verrou ou cran 167 porté par le contact mobile 168 dégage un bord de l'écran en permettant à celui-ci de se glisser très rapidement entre les contacts 168, 169; dans cette réalisation, des pièces magnétisables telles que 170 coopèrent avec le contact mobile pour ajouter leurs effets à ceux des forces de répulsion pour produire la séparation initiale.

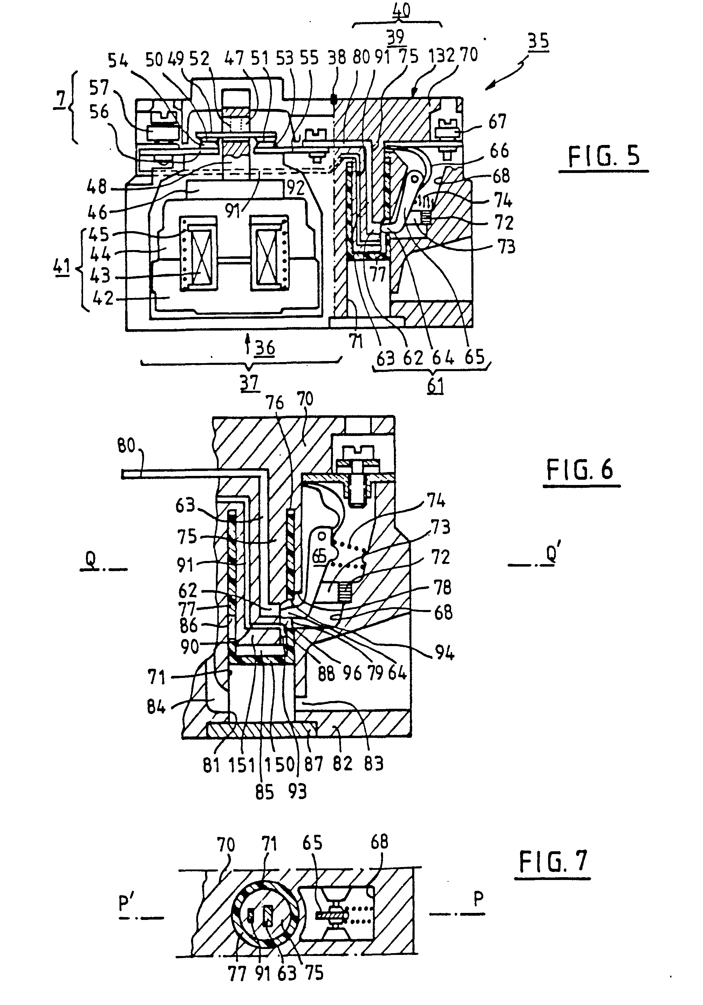

Un exemple de réalisation plus détaillé d'un appareil interrupteur de protection 35 selon l'invention est visible à la figure 5, ou, par exemple, dans un même boîtier 38, un dispositif contacteur 36 qui est situé dans la région gauche 37 d'un corps de cette figure, est associé à un dispositif limiteur de protection 39 qui est situé dans une région contiguë 40. Dans ce mode de réalisation, l'énergie nécessaire au déplacement de l'écran, ici tubulaire, est empruntée à celle qui est développée par l'apparition de l'arc initial Ai.

On retrouve en 41 un électro-aimant de commande comprenant la culasse fixe 42, la bobine 43, l'armature mobile 44 et son ressort de rappel 45; un porte-contact isolant 46 qui est rendu solidaire de l'armature, porte dans chacune des fenêtres telles que 47 d'une multiplicité de colonnes parallèles telles que 48, un pont de contact mobile 49 équipé de pastilles de contact 50, 51 et son ressort de pression de contact 52. Deux contacts fixes 54, 53 sont portés par des supports conducteurs 56 respectivement 55, dont l'un comporte une borne de raccordement 57 accessible de l'extérieur; cette borne correspond à celle qui est mentionnée en 5 à la figure 1, tandis que le pont de contact et les contacts fixes correspondent à l'interrupteur 7.

Le dispositif limiteur de protection 39 comporte, voir figure 6, un interrupteur 61 correspondant à celui portant la référence 9 à la figure 1, qui comprend un contact fixe 62 porté par une pièce de support conductrice 63 et un contact mobile 64 porté par un levier oscillant 65 sensiblement parallèle et conducteur se trouvant relié par une tresse souple 66 à une seconde borne 67 de l'appareil qui correspond à celle représentée en 6 à la figure 1. Les organes 64, 65, 66 sont situés dans une cavité 68 du corps 70 aboutissant à un logement cylindrique 71; cette cavité contient notamment une pièce magnétisable 72 en forme de U, dont les branches parallèles telles que 73 entourent le levier de contact 65; ce dernier reçoit les efforts élastiques d'un ressort de pression de contact 74 pour fermer l'interrupteur en position de repos.

Le long de son trajet sensiblement parallèle au levier 65, le support conducteur 63 est soit adossé contre un appui isolant 75 qui est rendu solidaire, par des moyens non représentés, d'une cloison ou du fond 76 du corps 70 de l'appareil, soit contenu à l'intérieur de cet appui. Dans les deux cas, ce support solidaire du fond 76 pénètre dans le logement 71. Autour de cet appui, dont la section peut prendre une forme sensiblement circulaire, voir figure 7, se trouve un étui 77 en matière isolante ayant de préférence une forme cylindrique de révolution, qui coulisse avec un faible jeu dans un logement 71 cylindrique; le fond 150 de cet étui est placé dans le logement 71. Le contact mobile 64 traverse une ouverture 78 commune au logement et à la cavité, et pénètre à travers une ouverture 79 de l'étui pour s'appuyer contre le contact fixe. L'extrémité 80 du support conducteur 63, opposée au contact fixe, est reliée au support de contact fixe 55 qui peut, à cet effet, être conformé comme la borne opposée 57 de l'interrupteur 7.

Le logement est relié à l'atmosphère dans sa partie inférieure 81 voisine de la base 82 par des évents tels que 83 et 84, voir aussi figure 6. Ces évents servent, d'une part, à purger l'air qui se trouve dans cette partie inférieure, lorsque l'étui se déplace vers le bas, et permettent, d'autre part, à des gaz ionisés qui se développent dans un volume 85 existant entre l'étui et le support 75 au cours d'une ouverture de l'interrupteur, de s'échapper à l'atmosphère par les ouvertures 78, 79 et/ou par une autre ouverture 86 de l'étui lorsque l'étui vient en butée contre une cloison 87 du boîtier servant éventuellement de bouchon pour le logement.

Une électrode de transfert conductrice 90, qui circule d'abord sensiblement parallèlement au support de contact 63, en étant isolée de ce dernier et en traversant par exemple l'appui 75, rejoint ensuite la borne 57 par le conducteur 91, en traversant par exemple l'une des cloisons isolantes 92 qui séparent deux interrupteurs tels que 7 voisins.

Cette électrode de transfert, voir figure 6, possède une extrémité libre interne 93, qui est voisine des deux contacts 62, 64 et qui aboutit à un volume 88 relié au précédent 85. Des moyens, qui retiennent l'étui dans la position de repos, illustrée à la figure 5, peuvent prendre l'allure de ressorts, ou de rebords élastiques latéraux susceptibles de s'écarter et de s'effacer hors du logement. Par ailleurs, des moyens d'orientation, non représentés, mais dont le mode de réalisation tombe sous le sens, permettent de conserver à l'étui une même orientation angulaire, afin que des moyens de réarmement non représentés lui donnent après un fonctionnement d'ouverture, une nouvelle position de repos identique à la précédente.

Le fonctionnement de cet appareil correspond à ceux des appareils précédents, à savoir que l'apparition d'une surintensité importante dans le circuit placé entre les bornes 57, 67 provoque d'abord l'ouverture de l'interrupteur limiteur 61 lorsque le levier 65 est, d'une part, repoussé par les forces électrodynamiques développées entre lui et le support 63 et, d'autre part, attiré vers le fond de la pièce magnétisable 72; l'arc initial, qui prend naissance à ce moment là, provoque une augmentation de pression dans les volumes 88, 85, de sorte que l'étui se déplace très rapidement vers le bas de la figure, et que le bord 94 de son ouverture 79 déplace l'arc et la zone ionisée qui l'entoure vers l'électrode de transfert 90, 93; lorsque la résistance de cet arc initial est supérieure à celle d'un arc de transfert qui peut se fixer entre l'électrode 93 et le contact mobile 64, celui-ci apparaît et cet arc initial disparaît, tandis que le mouvement de l'étui provoque le cisaillement de l'arc transféré au moment où le bord de l'ouverture vient en recouvrement avec l'arête 96 de la cavité qui limite l'ouverture 79.

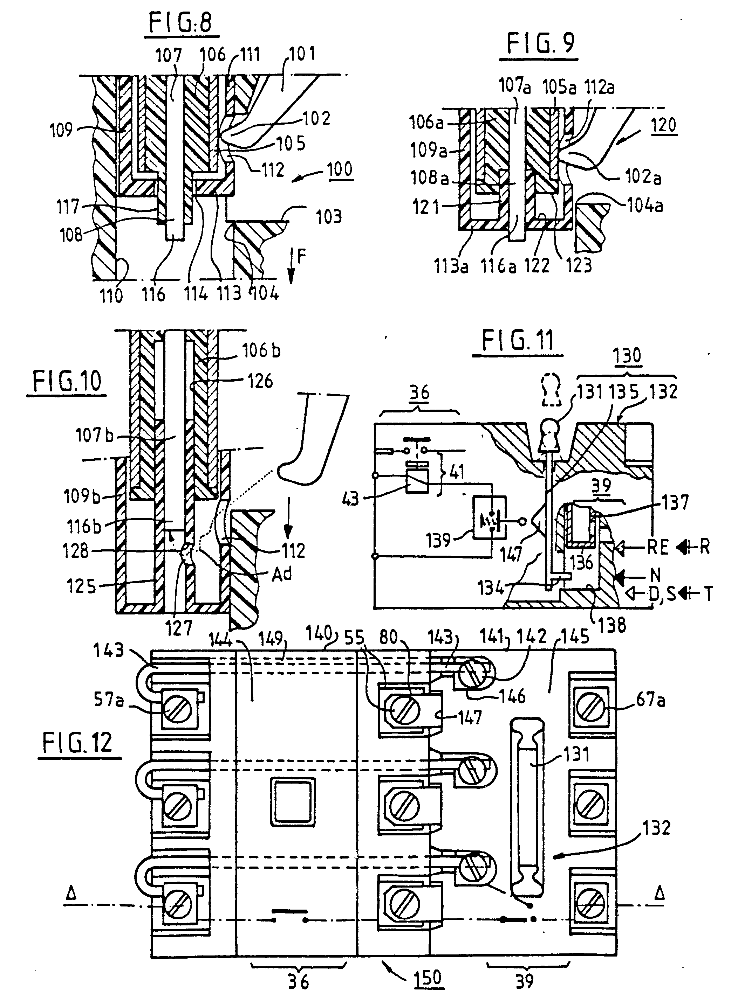

Dans une variante de ce mode de réalisation, qui est visible à la figure 8 et qui porte sur l'interrupteur limiteur, celui-ci 100 comporte un levier de contact 101, un contact mobile 102, une cavité 103 et une arête 104 identiques aux précédents. Le contact fixe 105 est ici représenté par une pièce conductrice, éventuellement tubulaire, placée à la surface externe d'une pièce d'appui isolante fixe 106, qui est traversée par un conducteur 107 sensiblement coaxial dont un prolongement 108, entouré latéralement par une chemise isolante 117, dépasse axialement la position de ce contact fixe. L'étui tubulaire 109 qui peut coulisser avec un jeu réduit approprié autour de la pièce d'appui et à l'intérieur du logement 110, possède sur sa jupe latérale 111 une ouverture 112 qui est placée, en position de repos, en regard du contact fixe pour laisser passer le contact mobile 102.

Cet étui possède sur sa paroi frontale 113 une seconde ouverture 114 qui entoure en position de repos la portion isolée 108. Une extrémité non isolée 116 du prolongement 108, qui représente l'électrode de transfert, est donc isolée par un chemin en chicane des contacts fixe et mobile pour la position de repos de l'étui, représentée à cette figure. Lorsqu'à la suite d'une ouverture de l'interrupteur limiteur, l'étui se déplace comme précédemment en sens F, la portion de jupe 111 placée au-dessus de l'ouverture, vient recouvrir le contact fixe, tandis que le prolongement se découvre simultanément.

L'arc initial entre les contacts 105, 102 est donc progressivement déplacé vers l'électrode de transfert 116, jusqu'au moment où une zone de gaz ionisés baigne simultanément cette électrode et le contact mobile, et où un arc de transfert s'établit entre eux. Cet arc initial est à son tour cisaillé par le recouvrement de l'ouverture 112 et de la paroi ou arête 104 qui limite la cavité 110.

Dans un autre mode de réalisation 120 de cette variante, visible à la figure 9, où les organes comparables ont des références de même rang accompagnés d'une lettre -a-, le prolongement $108_a$ de l'électrode de transfert $116_a$ n'est pas isolé par une chemise isolante solidaire de la pièce isolante $106_a$, mais par une chemise tubulaire 121 qui est portée par la face interne 122 du fond $113_a$ de l'étui $109_a$ et qui pénètre dans un évidement 123 de cette pièce isolante $106_a$ en établissant en position de repos représentée, des chicanes d'isolement; dans ce mode d'exécution, où le chemin de transfert est plus court que précédemment, le fonctionnement est identique à celui qui a été décrit.

En cas de besoin, un étirement de l'arc de transfert Ad peut être établi par une conformation particulière visible à la figure 10, où l'étui s'est déjà déplacé, et dans laquelle la chemise 125 se prolonge plus profondément à l'intérieur d'un évidement 126 de la pièce $106_b$. Cet étui comporte ici une ouverture latérale 127, qui permet à l'arc de transfert Ad de s'établir, mais dont le bord 128 oblige celui-ci à s'étirer au cours du déplacement en sens F de l'étui $109_b$.

Bien que l'ouverture de l'interrupteur limiteur 39 ait interrompu l'alimentation de la charge, on peut souhaiter confirmer cette ouverture du circuit par l'ouverture du contacteur 36 placé en série; dans ce cas, on peut placer en série dans le circuit d'alimentation de la bobine 43 de l'électro-aimant 41 un interrupteur 139 dont l'ouverture sera établie par exemple par le déplacement de l'étui, voir figure 11. Des dispositions doivent être prises pour que cet interrupteur ne soit ouvert que lorsque l'arc initial Ai est éteint.

Le cas échéant, un tiroir 154 peut aussi être utilisé soit pour interdire la commande du contacteur, soit moyennant la mise en oeuvre d'une disposition à came 151 et culbuteur 152, voir figure 13, provoquer l'ouverture manuelle du contact mobile de l'interrupteur limiteur 9 à des fins de sectionnement de la ligne dans une position stable "sectionné" S.

Le réarmement des étuis, c'est-à-dire l'opération par laquelle ceux-ci sont replacés en position de repos R, après une ouverture automatique qui les a amenés en position de travail T, peut être opéré à l'aide d'un tiroir à commande manuelle 130, voir figure 11, dont la poignée 131 est placée sur la face avant 132 de l'appareil 133, voir aussi figure 12; un crochet 134 placé à l'extrémité d'une tige 135 solidaire de cette poignée, et se trouvant en regard de la face frontale 136 de l'étui 137 dans le fond d'un logement 138 ayant une profondeur permettant une course supplémentaire de cet étui, permet de communiquer à celui-ci un mouvement allant de la position T vers la position R, après un fonctionnement provoqué par une surintensité. La commande d'un interrupteur de confirmation 139 mentionné ci-dessus peut être établie par l'intermédiaire de ce tiroir tant dans le sens de son ouverture, que dans le sens de sa refermeture, grâce à une came ou rampe 147 solidaire de la tige 135; dans ce cas, le tiroir doit être en mesure de prendre trois positions, l'une "normale" N, stable, pour laquelle l'interrupteur de confirmation 139 est fermé, l'autre "déclenchée" D, également stable, voisine de ou confondue avec la position S, pour laquelle ce tiroir a été un peu plus enfoncé par la percussion des étuis 137 contre le crochet 134 et où l'interrupteur 139 est ouvert, et la troisième de "réarmement" RE, de préférence instable, pour laquelle le tiroir 130 replace les étuis en position R, avant de reprendre la position N au besoin à l'aide d'un moyen élastique de rappel. La position de la poignée sur la face avant, qui permet par suite d'informer l'utilisateur de l'apparition d'un défaut de courant, se satisfait avantageusement d'une disposition où les étuis peuvent se déplacer dans des directions sensiblement perpendiculaires à cette face avant 132, et parallèles à celles des déplacements de l'armature de l'électro-aimant; cette orientation concourt en effet à une utilisation et à une combinaison rationnelles des volumes du contacteur et du limiteur dans laquelle les bornes de raccordement 57, 67W allant au réseau et à la charge sont placées à deux extrémités opposées de l'appareil.

Dans un mode de réalisation particulier 150 de l'appareil visible à la figure 12, le contacteur 36 et le limiteur 39 peuvent être disposés dans des boîtiers particuliers 140 respectivement 141 pouvant être mécaniquement associés. Les bornes 55 et 80 qui sont respectivement portées par ces deux boîtiers, ainsi que des bornes de transfert 142 et des conducteurs amovibles tels que 143, permettant d'établir le circuit $10_a$ de la figure 1 ou 91 de la figure 5 parallèlement à une droite $\Delta$ passant par deux bornes opposées, seront avantageusement disposés au voisinage des faces avant 144, 145 dans des canaux 149, alvéoles ou chambres isolées 146, 147 placées en retrait par rapport à ces faces pour recevoir des bornes 80.

Ainsi que cela a été représenté schématiquement à la figure 1, l'interrupteur de confirmation d'ouverture $i_1$ ou $i_2$ (qui est équivalent à celui représenté en 139 à la figure 11) peut être placé, soit au voisinage de l'interrupteur 9 pour raccourcir les moyens de transmission qui le commandent, soit au voisinage de l'électro-aimant 8 pour raccourcir le circuit d'alimentation de la bobine et éviter la présence de bornes locales de liaison lorsque l'appareil est constitué par l'assemblage de deux boîtiers.

**Revendications**

1. Appareil interrupteur comprenant, entre une première et une seconde bornes (5, 6) de raccordement reliées respectivement au réseau électrique et à une charge, un premier interrupteur (7) apte à établir et interrompre fréquemment le courant nominal de la charge et un second interrupteur (9) à ouverture automatique présentant des propriétés de limitation des courants de défaut tels que ceux des courts-circuits, avec, dans le voisinage des contacts (12, 13) du second interrupteur (9), une électrode de dérivation de l'arc (10) isolée desdits contacts et reliée au potentiel d'une première borne par un conducteur placé en parallèle sur le premier interrupteur (7), et qui est apte à présenter avec le contact de ce second interrupteur (9) relié à la seconde borne, un chemin de transfert ionisé par l'arc, dont la résistance est inférieure à la résistance apparente de l'arc initial apparaissant à l'instant initial de l'ouverture, caractérisé en ce que le premier interrupteur (7) est un interrupteur mécanique commandé par un électro-aimant et par le fait qu'une pièce isolante (14) vient s'intercaler entre les contacts du second interrupteur (9) à l'instant initial de l'ouverture pour faciliter le transfert de la zone ionisée par l'arc initial sur ladite électrode (10).

2. Appareil selon la revendication 1, caractérisé en ce que cette pièce isolante est constituée par un étui (77) qui coulisse le long d'une pièce isolante (75) supportant au voisinage de son extrémité (151) le contact fixe (62) du second interrupteur (9) et l'électrode de transfert (93), le contact mobile (64) traversant une ouverture latérale (79, 88) de cet étui qui est voisine du fond (150) et de l'électrode, et qui se déplace vers celle-ci lors d'une ouverture de ce second interrupteur.

3. Appareil selon la revendication 2, caractérisé en ce que l'ouverture latérale (79) se déplace en regard d'une ouverture (78) du boîtier isolant (70) qui fait communiquer avec un logement (71), parcouru par l'étui (77), une cavité (68) occupée par le support de contact mobile (65), tandis qu'un bord (104) de cette ouverture (78) opère le cisaillement de l'arc.

4. Appareil selon la revendication 3, caractérisé en ce que cette cavité (68) contient une pièce magnétisable (72, 73) qui attire le support de contact mobile (65) contre l'action d'un ressort de pression (74) lorsque circule une surintensité.

5. Appareil selon l'une des revendications 2 à 4, caractérisé en ce que les directions de déplacement de l'étui (77) sont perpendiculaires aux faces avant (132) pourvues de bornes (57, 55, 80, 67) du ou des boîtiers (140, 141) contenant les interrupteurs (7, 9).

6. Appareil selon l'une des revendications 1 à 5, caractérisé en ce que le contact mobile (64) est porté par un levier oscillant (65) qui est relié à l'une des bornes (67) de l'appareil placée dans un voisinage immédiat.

7. Appareil selon l'une des revendications 1 à 6, caractérisé en ce qu'un conducteur (91, $10_a$ 143) circulant parallèlement à une droite passant par les bornes d'entrée et de sortie de courant (5, 6) respectivement (67, 57), relie l'électrode de transfert (93) à la borne de l'appareil concernée (57) en traversant des régions isolées (92, 149) du boîtier contenant le premier interrupteur (7).

8. Appareil selon l'une des revendications 1 à 7, caractérisé en ce que des moyens (134) qui détectent l'ouverture du second interrupteur (39) agissent sur un organe mobile (135) ayant une extrémité (131) sur une face (132) du boîtier.

9. Appareil selon la revendication 8, caractérisé en ce que l'organe mobile (135) est solidaire d'un moyen de transmission (147) qui provoque l'ouverture d'un contact (139) placé en série avec la bobine de commande (43) du premier interrupteur (36).

10. Appareil selon l'une des revendications 8 ou 9, caractérisé en ce que les moyens de détection et transmission font partie d'un tiroir (130) dont la manoeuvre opère également la mise en position de repos de l'étui (137).

11. Appareil selon l'une des revendications 1 à 10, caractérisé en ce que le contacteur (36) actionnant les premiers interrupteurs, et les seconds interrupteurs (39) sont contenus dans

des boîtiers (140, 2$_a$) respectivement (141, 2$_b$) susceptibles de s'associer de façon amovible.

12. Appareil selon la revendication 1, caractérisé en ce que la pièce isolante est constituée par un écran plat (14) qui est déplacé dès l'ouverture des contacts (13, 12, 168, 169) du second interrupteur (9) par la libération d'un dispositif accumulateur d'énergie (166) ou respectivement par l'excitation d'un relais rapide (161, 162) placé en série avec les deux interrupteurs (7, 9).

**Patentansprüche**

1. Schaltgerät, das, zwischen einer ersten und einer zweiten Anschlussklemme (5, 6) die jeweils an das Stromnetz und an eine Last angeschlossen sind, einen ersten Schalter (7) aufweist, der häufig den Nennstrom der Last ein- und ausschalten kann, und einen zweiten Schalter (9) mit automatischer Öffnung, der geeignet ist, Fehlerströme wie z. B. diejenigen von Kurzschlüssen, zu begrenzen und, in der Nähe der Kontakte (12, 13) des zweiten Schalters (9), eine Elektrode (10) zur Ableitung des Lichtbogens, die im Verhältnis zu den Kontakten isoliert ist und an das Potential einer ersten Klemme durch einen Leiter angeschlossen ist, welcher zum ersten Schalter (7) parallelgeschaltet ist, welch Elektrode mit dem Kontakt des besagten zweiten Schalters (9), der an die zweite Klemme angeschlossen ist, einen vom Lichtbogen ionisierten Übertragungspfad bilden kann, dessen Widerstand geringer ist, als der Scheinwiderstand des anfänglichen, im Anfangsmoment der Öffnung auftretenden Lichtbogens, dadurch gekennzeichnet, dass der erste Schalter (7) ein von einem Elektromagneten gesteuerter mechanischer Schalter ist und durch die Tatsache, dass ein Isolierteil (14) sich im Anfangsmoment der Öffnung zwischen die Kontakte des zweiten Schalters (9) schiebt, um die Übertragung des vom anfänglichen Lichtbogen ionisierten Bereichs an besagte Elektrode (10) zu erleichtern.

2. Gerät nach Anspruch 1, dadurch gekennzeichnet, dass besagtes Isolierteil von einem Gehäuse (77) gebildet wird, welches entlang einem Isolierteil (75) gleitet, das in der Nähe seines Endes (151) den stationären Kontakt (62) des zweiten Schalters (9) und die Übertragungselektrode (93) trägt und dass der bewegliche Kontakt (64) eine seitliche Öffnung (79, 88) dieses Gehäuses durchquert, die dem Boden (150) und der Elektrode benachbart angeordnet ist und besagte Öffnung sich auf diese Elektrode zubewegt, wenn besagter Schalter geöffnet wird.

3. Gerät nach Anspruch 2, dadurch gekennzeichnet, dass die seitliche Öffnung (79) gegenüber einer Öffnung (78) des Isoliergehäuses (70) verschoben wird, welche eine Verbindung herstellt zwischen einer vom beweglichen Kontaktträger (63) eingenommenen Ausnehmung (68) und einer Kammer (71), in der sich das Gehäuse (77) bewegt, während ein Rand (104) dieser Öffnung (78) die Scherung des Bogens bewirkt.

4. Gerät nach Anspruch 3, dadurch gekennzeichnet, dass besagte Aussparung (68) ein magnetisierbares Teil (72, 73) enthält, welches den beweglichen Kontaktträger (65) entgegen der Wirkung einer Druckfeder (74) anzieht, wenn ein Überstrom fliesst.

5. Gerät nach einem der Ansprüche 2 bis 4, dadurch gekennzeichnet, dass die Bewegungsrichtungen des Gehäuses (77) senkrecht zu den Vorderseiten (132) verlaufen, die mit Klemmen (57, 55, 80, 67) des Kastens oder der Kästen (140, 141), welche die Schalter (7, 9) enthalten, versehen sind.

6. Gerät nach einem der Ansprüche 1 bis 5, dadurch gekennzeichnet, dass der bewegliche Kontakt (64) von einem schwingenden Hebel (65) getragen ist, der mit einer der in unmittelbarer Nachbarschaft angeordneten Klemmen (67) des Gerätes verbunden ist.

7. Gerät nach einem der Ansprüche 1 bis 6, dadurch gekennzeichnet, dass ein Leiter (91, 10$_a$, 143), welcher sich parallel zu einer durch die Stromzugangs- und Ausgangsklemmen (5, 6) bzw. (67, 57) verlaufenden Geraden erstreckt die Übertragungselektrode (93) mit der betroffenen Klemme (57) des Apparates verbindet, indem er isolierte Bereiche (92, 149) des Kastens, welcher den ersten Schalter enthält, durchquert.

8. Gerät nach einem der Ansprüche 1 bis 7, dadurch gekennzeichnet, dass Mittel (134), welche die Öffnung des zweiten Schalters (39) erfassen, auf ein bewegliches Organ (135) wirken, welches ein Ende (131) auf einer Seite (132) des Kastens hat.

9. Gerät nach Anspruch 8, dadurch gekennzeichnet, dass das bewegliche Organ (135) mit einem Übertragungsmittel (147) fest verbunden ist, welches die Öffnung eines in Reihe mit der Steuerspule (43) des ersten Schalters (36) geschalteten Kontaktes (139) bewirkt.

10. Gerät nach einem der Ansprüche 8 oder 9, dadurch gekennzeichnet, dass die Erfassungs- und Übertragungsmittel zu einem Schieber (130) gehören, dessen Betätigung ebenfalls die Inruhestellung des Gehäuses (137) bewirkt.

11. Gerät nach einem der Ansprüche 1 bis 10, dadurch gekennzeichnet, dass der Schütz (36), welcher die ersten Schalter betätigt und die zweiten Schalter (39) in Kästen (140, 2$_a$) bzw. (141, 2$_b$) enthalten sind, die lösbar einander zugeordnet werden können.

12. Gerät nach Anspruch 1, dadurch gekennzeichnet, dass das Isolierteil vom einem flachen Schirm (14) gebildet wird, welcher, sobald die Kontakte (13, 12, 168, 169) des zweiten Schalters (9) durch die Freisetzung einer Kraftspeichervorrichtung (166) oder durch die Erregung eines mit den zwei Schaltern (7, 9) in Reihe geschalteten Schnellrelais (161, 162) geöffnet werden, verschoben wird.

## Claims

1. An interrupting device comprising between a first and a second connecting terminal (5, 6) connected respectively to the electric mains and to a load, a first switch (7) adapted for establishing and interrupting frequently the nominal current of the load and a second switch (9) with automatic opening having properties for limiting fault currents such as those of short circuits with, in the vicinity of the contacts (12, 13) of said second switch (9), an electrode (10) for shunting the arc isolated from said contacts and connected to the potential of a first terminal by a conductor placed in parallel across the first switch (7), and which is adapted to form with the contact of this second switch (9) connected to the second connection terminal a transfer path ionized by the arc, whose resistance is less than the apparent resistance of the initial arc appearing at the initial time of opening, characterized in that the first switch (7) is a mechanical switch controlled by an electromagnet and in that an isolating part (14) slides between the contacts of the second switch (9) at the initial time of opening for facilitating the transfer of the region ionized by the initial arc to said electrode (10).

2. The apparatus as claimed in claim 1, characterized in that said isolating piece is formed by a case (77) which slides along an isolating piece (75) supporting in the vicinity of its end (151) the fixed contact (62) of the second switch (9) and the transfer electrode (93), the mobile contact (64) passing through a side opening (79, 88) in this case which is close to the bottom (150) and to the electrode and which moves towards this latter during opening of this second switch.

3. The apparatus as claimed in claim 2, characterized in that said side opening (79) moves opposite an opening (78) in the isolating box (70) which causes a cavity (68) occupied by the mobile contact support (65) to communicate with a housing (71) through which said case (77) passes, whereas an edge (104) of this opening (78) provides shearing of the arc.

4. The apparatus as claimed in claim 3, characterized in that said cavity (78) contains a magnetizable piece (72, 73) which attracts the mobile contact support (65) against the action of a pressure spring (74) when an over-current flows.

5. The apparatus as claimed in one of claims 2 to 4, characterized in that the directions of movement of the case (77) are perpendicular to the front faces (132) provided with terminals (57, 55, 80, 67) of the box or boxes (140, 141) containing the switches (7, 9).

6. The apparatus as claimed in one of claims 1 to 5, characterized in that the mobile contact (64) is carried by an oscillating lever (65) which is connected to one of the terminals (67) of the apparatus placed in the immediate vicinity.

7. The apparatus as claimed in one of claims 1 to 6, characterized in that a conductor (91, $10_a$, 143) extending parallel to a straight line passing through the current input and output terminals (5, 6), respectively (67, 57) connects the transfer electrode (93) to the terminal concerned of the apparatus (57) while passing through isolated regions (92, 149) of the box containing the first switch (7).

8. The apparatus as claimed on one of claims 1 to 7, characterized in that means (134) which detect the opening of the second switch (39) act on a mobile member (134) having one end (131) on a face (132) of the box.

9. The apparatus as claimed in claim 8, characterized in that said mobile member (135) is connected to a transmission means (147) which causes opening of a contact (139) placed in series with the control coil (43) of the first switch (36).

10. The apparatus as claimed in one of claims 8 or 9, characterized in that said detection and transmission means form part of a slider (130) whose operation also places the case (137) in the rest position.

11. The apparatus as claimed in one of claims 1 to 10, characterized in that the contactor (36) actuating the first switches, and the second switches (39) are contained in boxes (140, $2_a$), respectively (141, $2_b$) able to be associated removably.

12. The apparatus as claimed in claim 1, characterized in that said isolating piece is formed by a flat screen (14) which is moved as soon as the contacts (13, 12, 168, 169) of the second switch (9) open by the release of an energy accumulating device (166) or respectively by the energization of a high speed relay (161, 162) placed in series with the two switches (7, 9).

EP 0 204 594 B1

FIG.1

FIG. 2

FIG. 3

FIG. 4

RST

1

EP 0 204 594 B1

FIG. 5

FIG. 6

FIG. 7

3

FIG.8

FIG.9

FIG.10

FIG.11

FIG.12

FIG.13

FIG.14

FIG.16

FIG.15

FIG.17